# EUROPÄISCHE PATENTSCHRIFT

(11) **EP 2 761 261 B1**
(45) Veröffentlichungstag und Bekanntmachung des Hinweises auf die Patenterteilung: **08.08.2018**
(21) Anmeldenummer: 12759123.8
(22) Anmeldetag: 13.09.2012
(51) Int. Cl.: G01G 23/32, G01G 19/44

(54) **WAAGE MIT STRAHLUNGSEMITTIERENDEN BAUELEMENT**
SCALE WITH RADIATION-EMITTING ELEMENT
BALANCE AVEC ÉLÉMENT RAYONNANT

(30) Priorität: 27.09.2011 DE 102011083562
(43) Veröffentlichungstag der Anmeldung: 06.08.2014
(73) Patentinhaber: BSH Hausgeräte GmbH, 81739 München (DE)
(72) Erfinder: HACKER, Robert, 83342 Tacherting (DE); KIESSL, Manfred, 83342 Tacherting (DE); MAYERHOFER, Lukas, 83547 Babensham (DE)
(86) Internationale Anmeldenummer: PCT/EP2012/067988
(87) Internationale Veröffentlichungsnummer: WO 2013/045282

(56) Entgegenhaltungen:
- DE-U1-202010 015 044

## Beschreibung

Die vorliegende Erfindung betrifft eine Waage, insbesondere Personenwaage, mit einem strahlungsemittierenden Bauelement.

Personenwaagen mit einer Signalanzeigevorrichtung, die ein strahlungsemittierendes Bauelement umfasst, sind beispielsweise aus der Druckschrift DE 10 2009 049 567 A1 bekannt. Diese strahlungsemittierenden Bauelemente sind dabei jedoch an einer für den jeweiligen Benutzer während des Wiegevorgangs sichtbaren Aufnahmefläche der Waage angeordnet. Eine Steuereinheit der Waage ist dabei an einer der Aufnahmefläche gegenüberliegenden Auflagefläche der Waage angeordnet, sodass die für die strahlungsemittierenden Bauelemente benötigten Kabelleitungen von der Steuereinheit zu den Bauelementen weit geführt werden müssen. Zudem ist eine Personenwaagen der Druckschrift DE 10 2009 049 567 A1 nicht zu einer gleichmäßigen beziehungsweise homogenen Ausleuchtung der Umgebung geeignet.

Weiter sind Personenwaagen bekannt, die an jeder Seite an einer Tragplatte angeordnete strahlungsemittierende Bauelemente aufweisen. Aufgrund dieser seitlichen Anordnung werden nachteilig wiederum weit geführte Kabelleitungen für die strahlungsemittierenden Bauelemente benötigt. Zudem ermöglichen die strahlungsemittierenden Bauelemente aufgrund dieser seitlichen Anordnung und daraus resultierenden sogenannten "Hot Spots" keine gleichmäßige beziehungsweise homogene Ausleuchtung der direkten Umgebung der Waage.

Aus der DE 20 2010 015 044 U1 ist schließlich eine Personenwaage mit einem Gehäuse bekannt, das eine Standfläche zur Aufnahme einer zu wiegenden Person aufweist, wobei die Personenwaage LEDs umfasst, die jewels in einer Richtung Lichtstrahlen in einen Lichtleiter einstrahlen, um optische Effekte zu erzielen und gemessene Differenzwerte optisch zu verstärken. Eine homogene Ausleuchtung der direkten Umgebung der Waage ist damit widerrum nicht möglich.

Aufgabe der vorliegenden Erfindung ist es somit, eine verbesserte Waage anzugeben, die eine homogene Ausleuchtung der direkten Umgebung ermöglicht und hierfür gleichzeitig möglichst kurze Kabelleitungen benötigt.

Diese Aufgabe wird durch eine Waage mit den Merkmalen des Anspruchs 1 gelöst. Vorteilhafte Weiterbildungen der Erfindung sind Gegenstand.der Unteransprüche.

Erfindungsgemäß ist eine Waage, insbesondere Personenwaage, vorgesehen, die eine Tragplatte, zumindest eine Wägezelle zum Erfassen eines Messwertes, insbesondere zur Gewichtsmessung, und zumindest ein strahlungsemittierendes Bauelement umfasst. Die Tragplatte umfasst eine Aufnahmefläche zur Aufnahme einer zu wiegenden Masse und eine der Aufnahmefläche gegenüberliegende Auflagefläche. Das zumindest eine strahlungsemittierende Bauelemente ist an einer zusätzlichen Wägezelle angebracht, die zentral an der Auflagefläche angeordnet ist, womit insbesondere das zumindest eine strahlungsemittierende Bauelement zentral an der Auflagefläche angeordnet ist.

Unter "zentral angeordnet" ist insbesondere zu verstehen, dass das strahlungsemittierende Bauelement in der Mitte der Auflagefläche angeordnet ist. Weist die Tragplatte beispielsweise eine rechteck- oder quaderförmige Auflagefläche auf, so ist das strahlungsemittierende Bauelement im Bereich des Schnittpunkts der Diagonalen der rechteck- oder quaderförmigen Auflagefläche angeordnet.

"An der Auflagefläche angeordnet" bedeutet insbesondere, dass das strahlungsemittierende Bauelement direkt oder indirekt an der Auflagefläche befestigt ist. Beispielsweise weist die Auflagefläche integrierte Befestigungsbereiche zur Befestigung des zumindest einen strahlungsemittierenden Bauelements auf. Alternativ kann an der Auflagefläche ein separates Befestigungselement ausgebildet sein, an dem das zumindest eine strahlungsemittierende Bauelement befestigt ist.

Aufgrund der zentralen beziehungsweise mittigen Anordnung des zumindest einen strahlungsemittierenden Bauelements kann mit Vorteil eine gleichmäßige, insbesondere homogene Ausleuchtung der unmittelbaren Umgebung der Waage und/oder der Auflagefläche erzeugt werden. Insbesondere kann eine dezente und gleichmäßige Ausleuchtung realisiert werden.

Zudem ermöglichen sich aufgrund der zentralen Anordnung im Vergleich zu einer wie herkömmlich bekannten seitlichen Anordnung kürzere Kabelleitungswege zur elektrischen Kontaktierung des zumindest einen strahlungsemittierenden Bauelements, was vorteilhafterweise sowohl die Herstellungskosten vermindert als auch den Herstellungsprozess vereinfacht.

Die Tragplatte weist vorzugsweise ein elektrisch isolierendes Material auf. Beispielsweise ist die Tragplatte eine Glasplatte. Die zumindest eine Wägezelle ist bevorzugt ein Gewichtssensor.

Bei einer bevorzugten Weiterbildung ist eine Mehrzahl von strahlungsemittierenden Bauelementen zentral an der Auflagefläche angeordnet. Die strahlungsemittierenden Bauelemente sind dabei derart zueinander angeordnet, dass eine bevorzugt gleichmäßige Strahlungsemission in alle Richtungen der Auflagefläche erzeugt wird.

Um diese gleichmäßige Strahlungsemission zu gewährleisten, sind die strahlungsemittierenden Bauelemente beispielsweise rotationssymmetrisch zu einer zentralen Achse der Auflagefläche angeordnet. Bevorzugt sind Strahlungsauskoppelseiten der strahlungsemittierenden Bauelemente dabei jeweils von der zentralen Achse weggerichtet.

Zum Erzeugen der gleichmäßigen und bevorzugt homogenen Ausleuchtung finden vorzugsweise zumindest vier strahlungsemittierende Bauelemente Verwendung, die zentral an der Auflagefläche angeordnet sind. Jedes Bauelement ist dabei bevorzugt in Richtung einer Seitenfläche der Tragplatte ausgerichtet, wobei besonders bevorzugt jedem Bauelement eine andere Seitenfläche zugeordnet ist.

Bei einer weiteren bevorzugten Weiterbildung der Erfindung ist durch die strahlungsemittierenden Bauelemente eine gleichmäßige Ausleuchtung der Auflagefläche erzeugbar. Die gleichmäßige Ausleuchtung erfolgt insbesondere im Betrieb der strahlungsemittierenden Bauelemente.

Bei einer weiteren bevorzugten Weiterbildung der Erfindung sind die strahlungsemittierenden Bauelemente zur Erzeugung eines optischen Signals geeignet. Das bedeutet, dass die strahlungsemittierenden Bauelemente im Betrieb Strahlung emittieren, der eine bestimmte Information oder Bedeutung zuordenbar ist. Das optische Signal gibt dabei vorzugsweise eine Bewertung des jeweiligen Messwerts, insbesondere Gewichtswerts oder einer Körperanalyse, ab. Mit dem optischen Signal bekommt der Benutzer zusätzlich zu dem ermittelten Wert eine davon abhängige Bewertung ausgegeben.

Beispielsweise wird die Bewertung des optischen Signals durch eine bestimmte Farbe und/oder Helligkeit der im Betrieb der strahlungsemittierenden Bauelemente erzeugten Strahlung ausgebildet. Die Farbe und/oder Helligkeit der im Betrieb der strahlungsemittierenden Bauelemente erzeugten Strahlung variieren dabei abhängig von dem von der Waage ermittelten Wert. Beispielsweise erzeugen die strahlungsemittierenden Bauelemente bei einem hohen ermittelten Gewichtswert rote Strahlung und bei einem niedrigen ermittelten Gewichtswert grüne Strahlung. Die Einschätzung, ob der jeweilige Gewichtswert ein hoher oder niedriger Wert ist, kann beispielsweise mittels eines Referenzwertes erfolgen, der abhängig vom Benutzer in der Steuereinheit bevorzugt manuell eingebbar und besonders bevorzugt abspeicherbar ist. So kann der ermittelte Gewichtswert für jeden Benutzer mit einem individuellen Referenzwert verglichen und mittels der strahlungsemittierenden Bauelemente die entsprechende Bewertung als optisches Signal ausgegeben werden.

Bei einer weiteren bevorzugten Weiterbildung der Erfindung sind das oder die strahlungsemittierenden Bauelemente LEDs (Licht emittierende Dioden). LEDs zeichnen sich insbesondere durch eine geringe Leistungsaufnahme aus. Diese geringe Leistungsaufnahme ist gerade bei einem Batteriebetrieb von Vorteil, wie er häufig bei Personenwaagen Verwendung findet.

BErfindungsgemäß sind das oder die strahlungsemittierenden Bauelemente an einer zusätzlichen Wägezelle angebracht, die zentral an der Auflagefläche angeordnet ist. Vorzugsweise weist die Waage insgesamt vier an jeweils den Ecken der Tragplatte auf Seiten der Auflagefläche angebrachte Wägezellen und die mittig an der Auflagefläche angebrachte zusätzliche Wägezelle mit den strahlungsemittierenden Bauelementen auf.

Bei einer weiteren bevorzugten Weiterbildung der Erfindung umfasst die Waage eine Anzeigeeinheit, die den Messwert, vorzugsweise Gewichtswert, der zu wiegenden Masse anzeigt. Der ermittelte Messwert wird also an der Anzeigeeinheit ausgegeben. Die Anzeigeeinheit ist beispielsweise eine Digitalanzeige, die an der Aufnahmefläche angeordnet ist, sodass die Anzeige von der Seite der Waage sichtbar ist, auf der die zu wiegende Masse aufgebracht ist.

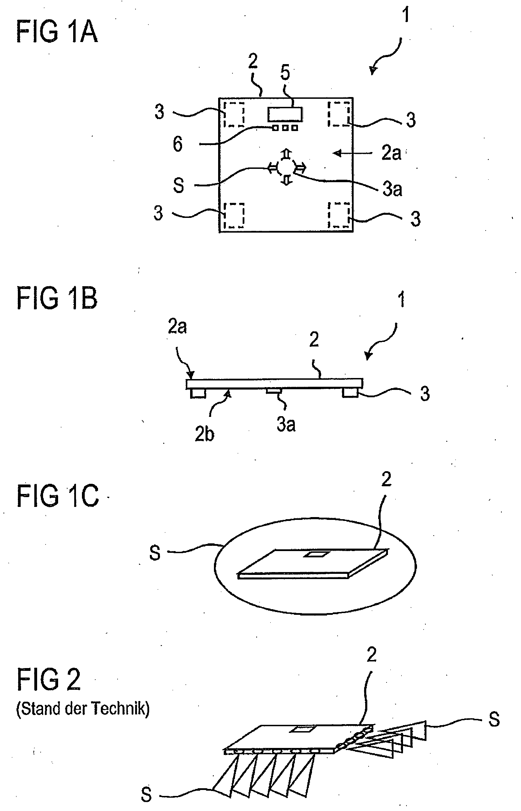

Weitere Vorteile, vorteilhafte Ausführungsformen und Weiterbildungen der Waage, insbesondere Personenwaage, ergeben sich aus der im Folgenden in Verbindung mit den Figuren 1 und 2 beschriebenen Ausführungsformen.
Figur 1A eine schematische Aufsicht auf ein Ausführungsbeispiel einer erfindungsgemäßen Personenwaage,
Figur 1B einen schematischen Querschnitt eines Ausführungsbeispiels der erfindungsgemäßen Personenwaage gemäß Figur 1A,
Figur 1C eine schematische Ansicht eines Ausführungsbeispiels der erfindungsgemäßen Personenwaage gemäß Figur 1A, und
Figur 2 eine schematische Ansicht eines Ausführungsbeispiels einer Personenwaage gemäß dem Stand der Technik.

In den Ausführungsbeispielen und Figuren können gleiche oder gleich wirkende Bestandteile jeweils mit den gleichen Bezugszeichen versehen sein. Die dargestellten Bestandteile und deren Größenverhältnisse zueinander sind grundsätzlich nicht als maßstabsgerecht anzusehen. Vielmehr können einzelne Elemente wie beispielsweise Schichten, Teile, Elemente, Komponenten und Bereiche zur besseren Darstellbarkeit und/oder zum besseren Verständnis übertrieben dick oder groß dimensioniert dargestellt sein.

Figur 2 zeigt eine herkömmliche Personenwaage 1 nach dem Stand der Technik, die eine Tragplatte 2 und seitlich an der Tragplatte 2 angeordnete Leuchtelemente umfasst.

Insbesondere ist an den jeweiligen Seitenflächen der Tragplatte 2 jeweils eine Mehrzahl von Leuchtelementen angeordnet. Jedes Leuchtelement emittiert dabei im Betrieb eine Strahlung S, wobei sich die Strahlung S jeweils in Form eines Lichtkegels ausbreitet. Dadurch erfolgt eine Mischung der von den einzelnen Leuchtelementen emittierten Strahlen erst ab einem bestimmten Abstand zur Waage 1, wodurch jedoch an der Waage sogenannte Hot Spots entstehen, die einer gleichmäßigen und homogenen Ausleuchtung der unmittelbaren Umgebung der Waage entgegenstehen.

Figur 1 zeigt eine Aufsicht auf eine erfindungsgemäße Personenwaage 1, die eine Tragplatte 2 aufweist, die zur Aufnahme einer zu wiegenden Masse dient. Hierzu weist die Tragplatte 2 eine Aufnahmefläche 2a auf, die in dem Ausführungsbeispiel der Figur 1 in Aufsicht dargestellt ist. Auf einer der Aufnahmefläche 2a gegenüberliegenden Seite weist die Tragplatte 2 eine Auflagefläche auf, die vorliegend von der Tragplatte 2 und der Aufnahmefläche 2a überdeckt ist. Die Tragplatte 2 ist beispielsweise eine Glasplatte. An der Aufnahmefläche 2a ist eine Anzeigeeinheit 5 ausgebildet, die einen von der Waage ermittelten Wert ausgibt, beispielsweise einen Gewichtswert. Vorzugsweise ist die Anzeigeeinheit 5 eine Digitalanzeige. Zudem weist die Personenwaage 1 an der Aufnahmefläche 2a Bedienelemente 6 auf, mittels der vom Benutzer bestimmte Funktionen angesteuert oder Eingaben getätigt werden können. Die Bedienelemente 6 dienen also dem Benutzer zum Bedienen der Waage und gegebenenfalls zum Einstellen verschiedenster Funktionen der Waage.

An der Auflageseite der Tragplatte 2 sind vier Wägezellen 3 angeordnet. Insbesondere ist an jedem Eck der Tragplatte 2 eine Wägezelle 3 angeordnet. Die Wägezellen 3 sind geeignet zur Gewichtsmessung. Beispielsweise sind die Wägezellen 3 jeweils ein Gewichtssensor. Zudem sind an der Auflageseite eine Steuereinheit befestigt (nicht dargestellt), die zum Steuern und zum Betrieb der Waage dient, und eine zusätzliche Wägezelle 3a zentral an der Auflageseite angeordnet, die ebenfalls zur Gewichtsmessung geeignet ist. Die Wägezellen 3, die Steuereinheit und die zusätzliche Wägezelle 3a sind für den Benutzer bevorzugt bei Benutzen der Personenwaage nicht sichtbar.

An der mittig befestigten zusätzlichen Wägezelle 3a sind vorliegend vier strahlungsemittierende Bauelemente, insbesondere LEDs, angeordnet. Die strahlungsemittierenden Bauelemente sind dabei derart zueinander angeordnet, dass eine Strahlungsemission S in alle Richtungen der Auflagefläche erzeugt wird. Vorliegend ist demnach jeweils eine Strahlungsemission S einer LED in Richtung einer Seitenfläche der Tragplatte gerichtet. Jeder Seitenfläche der Tragplatte 2 ist dabei genau eine LED zugeteilt. Dadurch kann eine gleichmäßige Ausleuchtung der Auflagefläche sowie der unmittelbar angrenzenden Umgebung der Tragplatte 2 beziehungsweise Waage 1 erzeugt werden. Aufgrund dieser dezenten Ausleuchtung der Auflagefläche kann eine Art Aura um die Personenwaage erzeugt werden.

Durch die zentrale beziehungsweise mittige Anordnung der LEDs sind mit Vorteil lediglich kurze Kabelleitungen zur elektrischen Kontaktierung der LEDs notwendig. Diese Kabelleitungen führen insbesondere von der Steuereinheit zu jeder LED. Beispielsweise weist die Steuereinheit eine Batterie zum Betrieb der Waage auf. Durch die nahe Anordnung der LEDs zueinander und der LEDs zur Steuereinheit ermöglichen sich vorteilhafterweise möglichst kurze Kabelführungen. Zudem können durch die zentrale Anordnung der LEDs sogenannte Hot Spots in der direkten Umgebung der Waage vermieden werden. Insbesondere kann durch den verlängerten Lichtweg der emittierten Strahlung zu den Seitenflächen der Tragplatte bereits eine homogene Ausleuchtung realisiert werden. Dies ist insbesondere dadurch möglich, da sich die Strahlung entsprechend eines Lichtkegels ausbreitet, sodass bei einem längeren Lichtweg ein größeres Umgebungsvolumen von diesem Lichtkegel erfasst wird.

Die strahlungsemittierenden Bauelemente können neben der homogenen Ausleuchtung zudem zur Erzeugung eines optischen Signals geeignet sein. Das optische Signal gibt vorzugsweise eine Bewertung der Gewichtsmessung aus. Die Bewertung des optischen Signals wird durch eine bestimmte Farbe und/oder Helligkeit der im Betrieb der strahlungsemittierenden Bauelemente erzeugten Strahlung ausgebildet. Beispielsweise variiert der Farbort von grün zu rot, oder umgekehrt, oder die LEDs werden während dem Wiegevorgang gedimmt oder als Lauflichter geschalten. Dabei kann die Ausgabe des optischen Signals bereits bei dem Einleiten des Wiegevorgangs erfolgen, wie beispielsweise das Dimmen oder die Lauflichter, oder aber die Ausgabe des optischen Signals erfolgt erst beim oder nach dem Ermitteln des Messwertes. In diesem Fall variieren die Farbe und/oder Helligkeit der im Betrieb der strahlungsemittierenden Bauelemente erzeugten Strahlung abhängig von dem von der Waage ermittelten Wert.

Hierzu ist von dem Benutzer vorzugsweise manuell ein entsprechender Referenzwert in die Waage eingebbar, beispielsweise mittels eines der Bedienelemente 6, sodass abhängig von diesem Referenzwert die Bewertung oder Beurteilung des ermittelten Wertes von der Waage automatisch erfolgt und durch das optische Signal an den Benutzer ausgegeben wird. Beispielsweise emittieren die strahlungsemittierenden Bauelemente bei Überschreiten des Referenzwertes Strahlung im roten Farbortbereich und bei einem Unterschreiten des Referenzwertes Strahlung im grünen Farbortbereich. Bevorzugt kann der Referenzwert für den jeweiligen Benutzer in der Steuereinheit zumindest temporär gespeichert werden, sodass nicht zu jedem Wiegevorgang eine wiederholte Eingabe des Referenzwertes zwangsläufig notwendig ist.

In Figur 1B ist ein Querschnitt der Personenwaage der Figur 1A dargestellt. Die an den Ecken der Tragplatte 2 angeordneten Wägezellen 3 dienen gleichzeitig als Auflagefüße der Waage 1. Die zusätzliche Wägezelle 3a dagegen ist in ihrer Höhe geringer ausgebildet als die restlichen Wägezellen 3, sodass auf dieser zusätzlichen Wägezelle 3a, die die LEDs umfasst, nicht das zu wiegende Gewicht lastet. Die zusätzliche Wägezelle 3a ist also etwas zurückgesetzt in ihrer Höhe ausgebildet, sodass höchstens beim Wiegevorgang die zusätzliche Wägezelle 3ä am Boden aufliegt.

In Figur 1C ist eine Quersicht der Personenwaage gezeigt, bei der die LEDs im Betrieb sind. Durch die zentral angeordneten LEDs ergibt sich eine gleichmäßige und homogene Ausleuchtung S der unmittelbaren Umgebung der Personenwaage, wodurch sogenannte Hot Spots vermieden werden.

### Bezugszeichnliste

- 1: Waage
- 2: Tragplatte
- 2a: Aufnahmefläche
- 2b: Auflagefläche
- 3: Wägezelle
- 3a: zusätzliche Wägezelle
- 5: Anzeigeeinheit
- 6: Bedienelement
- S: im Betrieb erzeugte Strahlung

## Patentansprüche

1. Waage (1), insbesondere Personenwaage, mit einer Tragplatte (2), die eine Aufnahmefläche (2a) zur Aufnahme einer zu wiegenden Masse umfasst, mit zumindest einer Wägezelle (3) zum Erfassen eines Messwertes, insbesondere zur Gewichtsmessung, und mit zumindest einem strahlungsemittierenden Bauelement, das an einer der Aufnahmefläche (2a) gegenüberliegenden Auflagefläche (2b) der Tragplatte (2) angeordnet ist,
**dadurch gekennzeichnet, dass**
das zumindest eine strahlungsemittierende Bauelement an einer zusätzlichen Wägezelle (3a) angebracht ist, die zentral an der Auflagefläche (2b) angeordnet ist.

2. Waage nach Anspruch 1, wobei
eine Mehrzahl von strahlungsemittierenden Bauelementen zentral an der Auflagefläche (2b) angeordnet ist, wobei die strahlungsemittierenden Bauelemente derart zueinander angeordnet sind, dass eine Strahlungsemission in alle Richtungen der Auflagefläche (2b) erzeugt wird.

3. Waage nach Anspruch 1 oder 2, wobei
zumindest vier strahlungsemittierende Bauelemente zentral an der Auflagefläche (2b) angeordnet sind.

4. Waage nach einem der vorhergehenden Ansprüche 2 oder 3, wobei
durch die strahlungsemittierenden Bauelemente eine gleichmäßige Ausleuchtung der Auflagefläche (2b) erzeugbar ist.

5. Waage nach einem der vorhergehenden Ansprüche 2 bis 4, wobei
die strahlungsemittierenden Bauelemente zur Erzeugung eines optischen Signals geeignet sind.

6. Waage nach Anspruch 5, wobei
das optische Signal eine Bewertung des Messwertes, insbesondere des Gewichtswertes oder einer Körperanalyse, ausgibt.

7. Waage nach Anspruch 6, wobei
die Bewertung des optischen Signals durch eine bestimmte Farbe und/oder Helligkeit einer im Betrieb der strahlungsemittierenden Bauelemente erzeugten Strahlung (S) ausgebildet ist.

8. Waage nach Anspruch 7, wobei
die Farbe und/oder Helligkeit der im Betrieb der strahlungsemittierenden Bauelemente erzeugten Strahlung (S) abhängig von einem von der Waage (1) ermittelten Wert variieren.

9. Waage nach einem der vorhergehenden Ansprüche, wobei
das oder die strahlungsemittierenden Bauelemente LEDs sind.

## Claims

1. Scale (1), in particular bathroom scales, with a base plate (2), which comprises a supporting surface (2a) for supporting a mass to be weighed, having at least one weighing cell (3) for detecting a measured value, in particular for measuring weight, and having at least one radiation-emitting component which is arranged on a contact surface (2b) of the base plate (2) which faces the supporting surface (2a),
**characterised in that**
the at least one radiation-emitting component is attached to an additional weighing cell (3a), which is arranged centrally on the contact surface (2b).

2. Scale according to claim 1, wherein
a plurality of radiation-emitting components is arranged centrally on the contact surface (2b), wherein the radiation-emitting components are arranged relative to one another such that a radiation emission is generated in all directions of the contact surface (2b).

3. Scale according to claim 1 or 2, wherein
at least four radiation-emitting components are arranged centrally on the contact surface (2b).

4. Scale according to one of the preceding claims 2 or 3, wherein
a uniform illumination of the contact surface (2b) can be generated by the radiation-emitting components.

5. Scale according to one of the preceding claims 2 to 4, wherein
the radiation-emitting components are suited to generating an optical signal.

6. Scale according to claim 5, wherein
the optical signal outputs an evaluation of the measured value, in particular of the weight value or a body analysis.

7. Scale according to claim 6, wherein
the evaluation of the optical signal is embodied by a specific colour and/or brightness of a radiation (S) generated during operation of the radiation-emitting components.

8. Scale according to claim 7, wherein
the colour and/or brightness of the radiation (S) generated during operation of the radiation-emitting components vary as a function of a value determined by the scale (1).

9. Scale according to one of the preceding claims, wherein
the radiation-emitting component(s) is/are LEDs.

## Revendications

1. Balance (1), notamment pèse-personne, comprenant une plaque porteuse (2) qui comprend une surface de réception (2a) destinée à recevoir une masse à peser, au moins une cellule de pesée (3) pour détecter une valeur de mesure, notamment une mesure de poids et au moins un élément rayonnant qui est disposé au niveau d'une surface de support (2b) de la plaque porteuse (2) opposée à la surface de réception (2a),
**caractérisée en ce que**
le au moins un élément rayonnant est monté sur une cellule de pesée supplémentaire (3a) qui est disposée au centre de la surface de support (2b).

2. Balance selon la revendication 1, dans laquelle
une pluralité d'éléments rayonnants sont disposés au centre de la surface de support (2b), les éléments rayonnants étant disposés l'un par rapport à l'autre de telle sorte qu'une émission de rayonnement est produite dans toutes les directions de la surface de support (2b).

3. Balance selon la revendication 1 ou 2, dans laquelle
au moins quatre éléments rayonnants sont disposés au centre de la surface de support (2b).

4. Balance selon l'une des revendications 2 ou 3, dans laquelle
un éclairage uniforme de la surface de support (2b) peut être produit par les éléments rayonnants.

5. Balance selon l'une des revendications 2 à 4, dans laquelle
les éléments rayonnants sont adaptés pour produire un signal optique.

6. Balance selon la revendication 5, dans laquelle
le signal optique fournit une évaluation de la valeur de mesure, notamment de la valeur de poids ou d'une analyse de la composition corporelle.

7. Balance selon la revendication 6, dans laquelle
l'évaluation du signal optique est formée par une certaine couleur et/ou une luminosité d'un rayonnement (S) produit par le fonctionnement des éléments rayonnants.

8. Balance selon la revendication 7, dans laquelle
la couleur et/ou la luminosité du rayonnement (S) produit par le fonctionnement des éléments rayonnants varient en fonction d'une valeur déterminée par la balance (1).

9. Balance selon l'une des revendications précédentes, dans laquelle
le ou les éléments rayonnants sont des DEL.
